# EUROPÄISCHE PATENTSCHRIFT

(11) **EP 4 183 525 B1**
(45) Veröffentlichungstag und Bekanntmachung des Hinweises auf die Patenterteilung: **03.12.2025**
(21) Anmeldenummer: 22207122.7
(22) Anmeldetag: 14.11.2022
(51) Int. Cl.: B25H 1/00, B25H 1/02, B23Q 1/03

(54) **TISCH FÜR EINE FLACHBETTMASCHINE UND VERFAHREN ZUR HERSTELLUNG EINES TISCHES FÜR EINE FLACHBETTMASCHINE**
TABLE FOR A FLAT BED MACHINE AND METHOD FOR PRODUCING A TABLE FOR A FLAT BED MACHINE
TABLE POUR UNE MACHINE À BANC PLAT ET PROCÉDÉ DE FABRICATION D'UNE TABLE POUR UNE MACHINE À BANC PLAT

(30) Priorität: 22.11.2021 DE 102021130423
(43) Veröffentlichungstag der Anmeldung: 24.05.2023
(73) Patentinhaber: Wissner, Kirsten, 14469 Potsdam (DE)
(72) Erfinder: Wissner, Kirsten, 14469 Potsdam (DE)
(74) Vertreter: REHBERG HÜPPE + PARTNER

(56) Entgegenhaltungen:
- WO-A1-2021/091379
- DE-A1- 102016 101 666

## Beschreibung

Die Erfindung betrifft einen Tisch für eine Flachbettmaschine. Genauer betrifft die Erfindung einen Tisch für eine Flachbettmaschine mit einem horizontal ausgerichteten Flachbett, einem das Flachbett umschließenden Oberrahmen, einem am Boden aufstehenden Unterrahmen und sich zwischen dem Oberrahmen und dem Unterrahmen erstreckenden Paneelelementen, wobei der Oberrahmen und der Unterrahmen jeweils mit mindestens zwei Stranggussprofilabschnitten gebildet sind, die längs zwei einander gegenüberliegenden Seiten des jeweiligen Rahmens durchlaufen und starr miteinander verbunden sind, und wobei an mindestens einem der Stranggussprofilabschnitte an einer der zwei einander gegenüberliegenden Seiten des Oberrahmens ein Auflager für eine Portalführungsschiene ausgebildet ist.

Das Flachbett des Tisches kann insbesondere eine Vakuumspannplatte, ein elektrostatisch aufladbare Oberfläche und/oder in einer Horizontalebene endende linienförmige Plattenabstützelemente aufweisen, ist aber nicht auf diese Ausführungsformen beschränkt.

Weiterhin betrifft die Erfindung ein Verfahren zur Herstellung eines Tisches für eine Flachbettmaschine. Genauer betrifft die Erfindung ein Verfahren zur Herstellung eines Tisches für eine Flachbettmaschine, der einen Oberrahmen, einen Unterrahmen und sich zwischen dem Oberrahmen und dem Unterrahmen erstreckende Paneelelemente aufweist, wobei der Oberrahmen gebildet wird, indem mindestens zwei Stranggussprofilabschnitte, die längs zwei seiner vier Seiten durchlaufen, starr miteinander verbundenen werden, und wobei mindestens an einem der Stranggussprofilabschnitte an einer der vier Seiten des Oberrahmens ein Auflager für eine Portalführungsschiene ausgebildet ist oder unter Materialabnahme von dem einen der Stranggussprofilabschnitte ausgebildet wird.

### STAND DER TECHNIK

Eine Flachbettmaschine dient zum Bearbeiten von im Wesentlichen platten- oder bahnenförmigen Objekten mit einem Werkzeug, bei dem es sich zum Beispiel um ein rotierendes mechanisches Werkzeug, einen Laserkopf, einen Druckkopf oder auch einen Plotterstift handeln kann. Insbesondere bei Flachbettmaschinen zur Bearbeitung von Objekten mit großer zweidimensionaler Erstreckung ist ein solches Werkzeug in der Regel verfahrbar an einem Portal abgestützt, das seinerseits parallel zu zwei einander gegenüberliegenden Längsseiten des Flachbetts verfahrbar ist. Eine präzise Bearbeitung des jeweiligen Objekts setzt voraus, dass diese Parallelität nicht verloren geht und das Flachbett über seine gesamte zweidimensionale Erstreckung eben ist. Zwar können kleinere Abweichungen von der Parallelität und eine gewisse Unebenheit des Flachbetts vermessen und kompensiert werden, dies ist aber auch nur dann möglich, wenn die Abweichungen und die Unebenheiten konstant bleiben. In jedem Fall muss die Relativanordnung zwischen der Portalführung einerseits und dem Flachbett andererseits formsteif sein, so dass sie sich unter den in Betrieb der Flachbettmaschine auftretenden Kräften nicht wesentlich verändert.

Typischerweise sind Portalführungsschienen einer Portalführung an einem Oberrahmen eines Tisches der Flachbettmaschine angeordnet, der das Flachbett in der Horizontalen umschließt oder den äußeren Rand des Flachbetts ausbildet. Um die erforderliche Formsteifigkeit der Relativanordnung zwischen der Portalführung und dem Flachbett zu erreichen, ist es insbesondere bei großen Flachbettmaschinen bekannt, den Oberrahmen aus Abschnitten eines starkwandigen gewalzten Stahlprofils auszubilden, die in den Ecken des Oberrahmens miteinander verschweißt werden. An den Abschnitten eines solchen hochsteifen Stahlprofils können Auflager für Portalführungsschienen unter Materialabnahme ausgebildet werden, ohne dass dies zu Verformungen der Abschnitte führt. Zur weiteren Aussteifung des Oberrahmens wird dieser über vertikale Stahlträger und Stahlstreben mit einem ebenfalls aus Stahl ausgebildeten Unterrahmen verbunden, so dass ein dreidimensionaler Stahlrahmen geschaffen wird. Die offenen Seiten dieses Stahlrahmens werden mit Blechen oder anderen sich zwischen dem Oberrahmen und dem Unterrahmen erstrecken Paneelelementen verschlossen. Ein derart ausgebildeter Tisch für eine Flachbettmaschine weist zwar die erforderliche Formsteifigkeit auf, ist aber einerseits sehr schwergewichtig und andererseits kostspielig in der Herstellung.

Für kleinere Flachbettmaschinen ist es bekannt, einen dreidimensionalen Rahmen mit Oberrahmen, Unterrahmen und diese verbindenden Trägern aus Stranggussprofilabschnitten aus Leichtmetalllegierungen auszubilden und mit Paneelelementen zu verkleiden. Die Stranggussprofilabschnitte können Abschnitte eines Ein- oder Mehrhohlkammerstranggussprofils mit bezogen auf sein Gewicht hoher Formsteifigkeit sein. Bereits direkt nach ihrer Herstellung, insbesondere aber nach Integration in einen Rahmen, bei der ihre Enden zur dauerhaften starren Verbindung miteinander verschweißt werden, sind Stranggussprofilabschnitte zur direkten Ausbildung eines Auflagers für eine Portalführungsschiene nicht ausreichend gerade, d. h. sie weisen keine für die erforderliche Parallelität der Portalführung zu dem jeweiligen Flachbett ausreichende Geradlinigkeit auf. Wenn jedoch ein geradliniges Auflager für eine Portalführungsschiene an einem Stranggussprofilabschnitt unter Materialabnahme ausgebildet wird, werden durch die lokale Materialabnahme Spannungen freigesetzt, die zuvor durch Spannungen in dem jetzt entfernten Material kompensiert wurden. Um Verformungen des Stranggussprofilabschnitts aufgrund der freigesetzten Spannungen zu vermeiden, bedarf es entweder starkwandiger und/oder voluminöser Stranggussprofilabschnitte oder zumindest einer formsteifen Ausbildung des dreidimensionalen Rahmens des Tisches der jeweiligen Flachbettmaschine. Im letzteren Fall darf das Auflager für die jeweilige Portalführungsschiene aber erst dann ausgebildet werden, wenn der formsteife dreidimensionale Rahmen des Tisches bereits existiert. Auflager für Portalführungsschienen an einem großen dreidimensionalen Rahmen durch Fräsen und/oder Schleifen auszubilden, ist jedoch extrem aufwändig und erfordert eine extrem große Werkzeugmaschine, beispielsweise eine extrem große Portalfräsmaschine. Die Portalfräsmaschine muss ein hohes Portal, das zum Überfahren des gesamten Tisches der herzustellenden Flachbettmaschine geeignet ist, und ein zum Abstützen des gesamten Tisches geeignetes Werkstückauflager aufweisen. Es erweist sich daher als aufwändig, die vorhandenen Gewichtseinsparungspotentiale von Stranggussprofilabschnitten aus Leichtmetalllegierungen bei der Herstellung von Flachbettmaschinen zu nutzen.

Aus der WO 2021/091379A1 sind ein modularer Maschinentisch mit den Merkmalen des Oberbegriffs des Patentanspruchs 1 und ein Verfahren zur Herstellung eines Maschinentisches mit den Merkmalen des Oberbegriffs des unabhängigen Patentanspruchs 12 bekannt. Der Maschinentisch weist einen Satz von sich vertikal erstreckenden Seitenplatten auf, die an obere und untere Teile eines Rahmens angeschlossen sind. Die Seitenplatten sind mit Bolzen an vertikal verlaufenden Anschlagflächen von horizontal gestreckten oberen und unteren Balken befestigt. Die vertikal verlaufenden Anschlagflächen weisen vertikal langgestreckte Schlitze für die Bolzen auf. Die vertikal verlaufenden Anschlagflächen der oberen und unteren Balken sind jeweils zwischen einem Paar von zwei Seitenplatten angeordnet.

Aus der CH 667 229 A5 ist ein Maschinentisch in Modulbauweise für Fertigungseinrichtungen bekannt. Der Maschinentisch weist vertikal verlaufende Stützelemente auf, die über horizontal verlaufende Querstreben miteinander verbunden sind. Die vertikalen Stützelemente sind durch zwei plattenförmige Bauelemente gebildet. Diese sind über die horizontal verlaufenden Querstreben miteinander verbunden. Den zu den Querstreben parallel verlaufenden, in einer Ebene angeordneten Stirnseiten der Bauelemente ist eine selbsttragende Tischplatte zugeordnet. Diese Tischplatte ist an den Stirnseiten und den Querstreben mit lösbaren Verbindungsvorrichtungen befestigt.

Aus der DE 33 26 360 A1 ist ein Werktisch mit 4 Beinen bekannt, der ein Gestell mit zwei parallel zueinander im Abstand angeordneten Zargen-Bein-Elementen aufweist. Die Beine weisen jeweils zwei im Abstand voneinander liegende plattenförmige Beinelemente auf, zwischen die am oberen Ende Längszargen mit ihren Enden eingreifen. Am unteren Ende greifen plattenförmig ausgebildete Teile von höhenverstellbaren Fußelementen ein. Es ist wenigstens eine die Längszargen verbindende Querzarge vorgesehen, die mit ihren Stirnseiten stumpf gegen die Innenseite der Längszargen bzw. der Beinelemente stößt und mit diesen verschraubt ist. Es sind weitere Spannelemente vorgesehen, die über Schraubverbindungen mit den Zargen-Bein-Elementen verbunden sind und über die eine Platte auf den Zargen aufliegend gehaltert ist.

### AUFGABE DER ERFINDUNG

Der Erfindung liegt die Aufgabe zugrunde, einen Tisch für eine Flachbettmaschine und ein Verfahren zur dessen Herstellung aufzuzeigen, mit denen die Gewichtsvorteile von Stranggussprofilabschnitten aus Leichtmetalllegierungen trotz begrenztem Aufwand weitreichend nutzbar sind.

### LÖSUNG

Die Aufgabe der Erfindung wird durch einen Tisch mit den Merkmalen des unabhängigen Patentanspruchs 1 und durch ein Verfahren mit den Merkmalen des nebengeordneten Patentanspruchs 12 gelöst. Die abhängigen Patentansprüche 2 bis 11 betreffen bevorzugte Ausführungsformen des erfindungsgemäßen Tisches, die abhängigen Patentansprüche 13 bis 15 bevorzugte Ausführungsformen des erfindungsgemäßen Verfahrens.

### BESCHREIBUNG DER ERFINDUNG

Der erfindungsgemäße Tisch für eine Flachbettmaschine weist ein horizontal ausgerichtetes Flachbett, einen das Flachbett umschließenden Oberrahmen, einen am Boden aufstehenden Unterrahmen und sich zwischen dem Oberrahmen und dem Unterrahmen erstreckende Paneelelemente auf. Der Oberrahmen ist mit mindestens zwei Stranggussprofilabschnitten gebildet, die längs zwei einander gegenüberliegenden Seiten des Oberrahmens durchlaufen und starr miteinander verbunden sind. Mindestens an dem Stranggussprofilabschnitt an einer der zwei einander gegenüberliegenden Seiten des Oberrahmens ist ein Auflager für eine Portalführungsschiene ausgebildet. Der Unterrahmen ist mit mindestens zwei weiteren Stranggussprofilabschnitten gebildet, die längs zwei einander gegenüberliegenden Seiten des Unterrahmens durchlaufen und starr miteinander verbunden sind. An den Unterseiten der Stranggussprofilabschnitte des Oberrahmens sind vertikal verlaufende Anschlagflächen für obere Enden der Paneelelemente ausgeformt. An Oberseiten der weiteren Stranggussprofilabschnitte des Unterrahmens sind weitere vertikal verlaufende Anschlagflächen für untere Enden der Paneelelemente ausgeformt. Die Paneelelemente sind derart ausgebildet und an dem Unterrahmen und dem Oberrahmen sowie aneinander befestigt, dass aus dem Oberrahmen, den Paneelelementen und dem Unterrahmen ein formsteifes Tischgestell gebildet ist.

Häufig werden an beiden Stranggussprofilabschnitten an den beiden einander gegenüberliegenden Seiten des Oberrahmens Auflager für Portalführungsschienen ausgebildet sein. Ein Portal der Flachbildmaschine kann dann an zwei einander über das Flachbett hinweg gegenüberliegenden Portalführungsschienen geführt sein. Grundsätzlich kann die Führung aber auch nur einseitig erfolgen und das Portal an dem Stranggussprofilabschnitt auf der der einen Portalführungsschiene gegenüberliegenden Seite des Oberrahmens nur abgestützt und nicht speziell geführt sein.

Dass die Anschlagflächen für die oberen und die weiteren Anschlagflächen für die unteren Enden der Paneelelemente vertikal verlaufen, bedeutet, dass sie im Wesentlichen vertikal verlaufen und schließt nicht aus, dass diese Anschlagflächen kleine Neigungswinkel von nicht mehr als +/- 10°, vorzugsweise von nicht mehr als +/- 5°, zur Vertikalen aufweisen. Besonders bevorzugt verlaufen die vertikalen Anschlagflächen und weiteren Anschlagflächen exakt vertikal, so dass ihre Neigungswinkel zur Vertikalen bei 0° liegen. Die Paneelelemente liegen bei dem erfindungsgemäßen Tisch an den Anschlagflächen und den weiteren Anschlagflächen an. Die erfindungsgemäß vorhandene Befestigung der Paneelelemente an dem Oberrahmen und dem Unterrahmen ist vorzugsweise so ausgeführt, dass die Paneelelemente unmittelbar an den Anschlagflächen und den weiteren Anschlagflächen befestigt sind. Alternativ können die Paneelelemente an Bereichen des Oberrahmens und des Unterrahmens befestigt sein, die den Anschlagflächen und den weiteren Anschlagflächen benachbart sind. Eine solche Befestigung an benachbarten Bereichen kann auch zusätzlich zu der bevorzugten Befestigung der Paneelelemente an den Anschlagflächen und den weiteren Anschlagflächen vorhanden sein.

Die Paneelelemente sind nicht nur an dem Unterrahmen und dem Oberrahmen, sondern auch aneinander befestigt; und die Paneele sind derart formsteif ausgebildet, dass aus dem Oberrahmen, den Paneelelementen und dem Unterrahmen ein formsteifes Tischgestell gebildet ist. Außer den Paneelelementen weist dieses formsteife Tischgestell keine Vertikalträger auf, die den Unterrahmen und den Oberrahmen zu einem dreidimensionalen Rahmen verbinden, bzw. etwaig vorhandene Vertikalträger könnten entfernt werden, und dennoch verbliebe ein aus dem Oberrahmen, den Paneelelementen und dem Unterrahmen gebildetes formsteifes Tischgestell.

Die Formsteifigkeit dieses Tischgestells ist so hoch, dass die Linearität aller Auflager für Portalführungsschienen an dem Oberrahmen sichergestellt ist. Dies gilt selbst dann, wenn die Auflager unter Materialabnahme von dem jeweiligen Stranggussprofilabschnitt ausgebildet sind, d. h. trotz der damit freigesetzten Materialspannungen. Vielmehr werden die freigesetzten Spannungen durch das formsteife Tischgestell abgetragen. So kommt es zu keinen wesentlichen Verformungen der Auflager. Überraschenderweise wird dies und wird auch eine vollkommen ausreichende vertikale Belastbarkeit des Tisches durch auf seinem Flachbett aufliegende zu bearbeitende Objekte ohne einen bekannten dreidimensionalen Rahmen mit speziellen Vertikalträgern erreicht. Die Funktion der bei dem erfindungsgemäßen Tisch nicht vorhandenen speziellen Vertikalträger wird durch die Paneelelemente übernommen, die bei dem erfindungsgemäßen Tisch also sowohl zum Verblenden von Öffnungen des Tischgestells dienen, als auch tragende und versteifende Funktion haben. Tatsächlich erfüllen die Paneelelemente diese tragende und versteifende Funktion zwischen dem Oberrahmen und dem Unterrahmen alleine. Die bei dem erfindungsgemäßen Tisch eingesparten oder zumindest einsparbaren speziellen Vertikalträger müssen weder an dem Oberrahmen und dem Unterrahmen befestigt werden, noch tragen sie zu dem Gewicht des erfindungsgemäßen Tisches bei. Dieses Gewicht ist vielmehr durch die Mehrfachnutzung der Paneelelemente als Blenden und zur Kraftübertragung zwischen Oberrahmen und dem Unterrahmen verglichen mit der Formsteifigkeit des Tischgestells besonders niedrig.

Die vertikal verlaufenden Anschlagflächen können in Nuten in den Unterseiten der Stranggussprofilabschnitte angeordnet sein, wobei diese Nuten die oberen Enden der Paneelelemente aufnehmen. Entsprechend können die weiteren vertikal verlaufenden Anschlagflächen in weiteren Nuten in den Oberseiten der weiteren Stranggussprofilabschnitte angeordnet sein, wobei die weiteren Nuten die unteren Enden der Paneelelemente aufnehmen. Die Nuten können so schmal ausgebildet sein und ausgeformt sein, dass sie die Enden der Paneelelemente spielfrei aufnehmen, so dass beide Seitenflächen jeder Nut vertikale Anschlagflächen für eines der Enden der Paneelelemente ausbilden. So können Kräfte zwischen den Paneelelementen einerseits und dem Oberrahmen und dem Unterrahmen andererseits nicht nur über die Befestigungen der Paneelelemente an dem Oberrahmen und dem Unterrahmen, sondern auch über den formschlüssigen Eingriff der Enden der Paneele in die Nuten in dem Oberrahmen und dem Unterrahmen abgetragen werden.

Grundsätzlich kann der Oberrahmen mit den beiden längs seiner zwei einander gegenüberliegenden Seiten durchlaufenden Stranggussprofilabschnitten und mit zwei Stirnpaneelen oder dergleichen an den beiden weiteren Seiten des Oberrahmens ausgebildet sein, über die die Stranggussprofilabschnitte aneinander befestigt sind, Dann kann der Unterrahmen mit den beiden längs seiner zwei einander gegenüberliegenden Seiten durchlaufenden weiteren Stranggussprofilabschnitten und denselben zwei Stirnpaneelen oder dergleichen ausgebildet sein, über die dann auch die weiteren Stranggussprofilabschnitte aneinander befestigt sind. Vorzugsweise ist der Oberrahmen aber mit vier längs seiner vier Seiten durchlaufenden und in seinen vier Ecken starr miteinander verbundenen Stranggussprofilabschnitten gebildet. Entsprechend ist der Unterrahmen vorzugsweise mit längs seiner vier Seiten durchlaufenden und in seinen vier Ecken starr miteinander verbundenen weiteren Stranggussprofilabschnitten gebildet. Die vier Stranggussprofilabschnitte und/oder die vier weiteren Stranggussprofilabschnitte können durch verschweißte Gehrungen miteinander verbunden sein. So werden die Stranggussprofilabschnitte bzw. die weiteren Stranggussprofilabschnitte ohne zusätzliche Verbindungselemente formsteif miteinander verbunden. Bei Verbindungen von Stranggussprofilabschnitte durch Verschweißen von Gehrungen werden zumindest die Schnittflächen der auf Gehrung abgelängten Stranggussprofilabschnitte miteinander verschweißt, die an den Stranggussprofilabschnitten außen liegen und daher zugänglich sind. Diese außen liegenden Schnittflächen sind für die Formsteifigkeit des Oberrahmens und des Unterrahmens besonders wichtig. Es versteht sich, dass für eine Verbindung durch verschweißte Gehrungen die Stranggussprofilabschnitte des Oberrahmens und des Unterrahmens jeweils gleiche Profilquerschnitte aufweisen müssen. Hingegen können die Stranggussprofilabschnitte des Oberrahmens einerseits und des Unterrahmens andererseits durchaus unterschiedliche Profilquerschnitte aufweisen.

Die Stranggussprofilabschnitte sind Abschnitte eines Ein- oder Mehrhohlkammerstranggussprofils und die weiteren Stranggussprofilabschnitte können Abschnitte eines Ein- oder Mehrhohlkammerstranggussprofils sein. Dabei können die eine Hohlkammer oder die mehreren Hohlkammern so geformt und relativ zueinander angeordnet sein, dass eine möglichst hohe Formsteifigkeit des jeweiligen Stranggussprofilabschnitts erreicht wird. Dabei kann insbesondere auf eine Formsteifigkeit abgezielt werden, die zu möglichst geringen Verwerfungen und anderen Verformungen des mindestens einen Stranggussprofilabschnitts führt, an dem das Auflager für die Portalführungsschiene gegebenenfalls unter Materialabnahme von dem Stranggussprofil ausgebildet ist. Zur Erreichung dieses Zwecks ist nicht nur die Form der einen oder der mehreren Hohlkammern in dem Stranggussprofil zu optimieren. Auch die lokalen Wandstärken des Stranggussprofils sind hieran anzupassen.

Die Stranggussprofilabschnitte des Oberrahmens und des Unterrahmens des erfindungsgemäßen Tisches sind vorzugsweise aus einer oder aus verschiedenen Leichtmetalllegierungen stranggegossen. Dabei ist die Angabe "stranggegossen" hier ebenso wenig eng zu verstehen wie der Wortbestandteil "Strangguss" von Stranggussprofilen. Die Stranggussprofilabschnitte können auch Abschnitte eines sogenannten Strangpress- oder Extrusionsprofils, insbesondere jeweils aus einer Leichtmetalllegierung sein. Die Leichtmetalllegierung kann überwiegend aus Aluminium und/oder Magnesium bestehen und eine Legierungszusammensetzung aufweisen, wie sie für Strangguss-, Strangpress- und Extrusionsprofile aus Leichtmetalllegierungen üblich sind. Vorzugsweise ist die jeweilige Leichtmetalllegierung so gewählt, dass sie gut schweißbar ist, um die Leichtmetallprofilabschnitte durch Verschweißen miteinander und auch mit den Paneelelementen verbinden zu können. Es versteht sich, dass Letzteres auch die Ausbildung der Paneelelemente aus einer Legierung, vorzugsweise einer Leitmetalllegierung, erfordert, die mit den Leichtmetalllegierungen der Stranggussprofilabschnitte verschweißbar ist.

Konkret können die Paneelelemente an dem Oberrahmen und/oder dem Unterrahmen sowie aneinander durch Schweißpunkte oder Schweißperlen befestigt sein. Das Anbringen solcher Schweißpunkte oder Schweißperlen kann schnell und weitgehend automatisiert erfolgen. Zudem ruft das Anbringen von Schweißpunkten oder Schweißperlen - im Gegensatz zum aufwändigeren Anbringen durchgehender Schweißnähte - keine oder nur kleine Materialspannungen in den Paneelelemente, dem Oberrahmen und dem Unterrahmen hervor. Grundsätzlich können die Paneelelemente an dem Oberrahmen und/oder dem Unterrahmen sowie aneinander auch durch Verkleben befestigt sein, und zwar zusätzlich oder alternativ zu den Schweißpunkten oder Schweißperlen.

Die Paneelelemente können insbesondere Blechformteile oder Flachprofilabschnitte, insbesondere Stranggussflachprofilabschnitte, mit zwischen dem Oberrahmen und dem Unterrahmen durchlaufenden Abkantungen, sein. Diese Abkantungen können bei den Flachprofilabschnitten direkt im Rahmen ihres Stranggusses ausgeformt oder wie bei den Blechformteilen nachträglich angebracht sein. Sie erhöhen in grundsätzlich bekannter Weise die Formsteifigkeit der Paneelelemente und stabilisieren diese gegen Biegung und Ausbeulen. Die Abkantungen können Abkantungen mit Kantenwinkel ≥ 100°, vorzugsweise ≥ 110° umfassen. Zwischen zwei solchen Abkantungen von aneinander angrenzenden Paneelelementen bilden sich Kerben mit einem Kerbwinkel von ≥ 20°, bzw. ≥ 40° aus. In diesen Kerben können die Schweißperlen angebracht werden, die die aneinander angrenzenden Paneelelemente aneinander befestigen. Wenn diese Kerben auf der Rückseite der Paneelelemente angeordnet sind, bleiben sie selbst und die darin angeordneten Schweißperlen unsichtbar. Auch ein Klebstoff zum Verkleben der aneinander angrenzenden Paneelelemente kann in diese Kerben eingebracht werden.

Die zwischen dem Oberrahmen und dem Unterrahmen durchlaufenden Abkantungen, d. h. deren Kantenlinien, können vertikal verlaufen, d. h. auf kürzestem Wege zwischen dem Oberrahmen und dem Unterrahmen. Die Abkantungen können jedoch auch Abkantungen mit Kantenlinien umfassen, die unter Winkeln ≥ 20°, vorzugsweise ≥ 30° und typischerweise kleiner als 60° oder kleiner als 45°, zur Vertikalen verlaufen. Während die vertikal verlaufenden Abkantungen die Paneelelemente gegen vertikale Kräfte aussteifen, werden mit den geneigt zur Vertikalen verlaufenden Abkantungen die Funktionen von Diagonalstreben zwischen dem Oberrahmen und dem Unterrahmen realisiert. Vor diesem Hintergrund versteht es sich, dass es besonders vorteilhaft ist, wenn die Abkantungen an allen Seiten des Tisches in wechselnden Richtungen zur Vertikalen geneigt sind.

Zur nachträglichen Ausbildung von geradlinigen Abkantungen ohne Einleitung übermäßiger Materialspannungen in die Blechformteile oder Flachprofilabschnitte ist es vorteilhaft, eine Wandstärke der Blechformteile oder Flachprofilabschnitte auf einer Innenseite der Abkantungen, d. h. längs der Abkantungen, nutförmig zu reduzieren.

Bei dem erfindungsgemäßen Tisch können die aneinander befestigten Paneelelemente in der Horizontalen lückenlos aneinander anschließen, so dass die aneinander befestigten Paneelelemente einen in der Horizontalen umlaufenden Zwischenrahmen ausbilden. In der Horizontalen selbst ist dieser Zwischenrahmen relativ formweich. In der Horizontalen ist aber sowohl der an dem Zwischenrahmen befestigte Oberrahmen als auch der daran befestigte Unterrahmen formsteif, so dass sich der Oberrahmen, der Zwischenrahmen und der Unterrahmen zu einem sehr formsteifen Ganzen ergänzt.

Die Paneelelemente des erfindungsgemäßen Tisches können auch in den Ecken des Tisches aneinanderstoßen. Bevorzugt ist es jedoch, wenn die Paneelelemente mindestens zwei oder sogar vier Winkelelemente umfassen, die sich jeweils über eine Ecke des Tisches hinweg erstrecken, also eine Abkantung oder Umbiegung in der jeweiligen Ecke des Tisches aufweisen.

Um den erfindungsgemäßen Tisch insgesamt vor Korrosion zu schützen und ihm ein hochwertiges Erscheinungsbild zu verleihen, kann das Tischgestell, evtl. unter Ausschluss des mindestens einen Auflagers für die Portalführungsschiene, als Ganzes lackiert sein. Die einzelnen Paneelelemente des Tisches können so dicht aneinander und an dem Oberrahmen und den Unterrahmen angrenzen, dass beim gemeinsamen Lackieren geschlossene Oberflächen des fertigen Tischgestells entstehen.

Jedes Auflager für jede Portalführungsschiene kann bereits bei der Herstellung des jeweiligen Stranggussprofilabschnitts an diesem ausgebildet sein. Eine Nichtlinearität eines solchen Auflagers kann bei der Herstellung des erfindungsgemäßen Tisches beseitigt werden, wie noch näher beschrieben werden wird. Eine einmal erreichte Linearität des Auflagers wird dann durch die hohe Formsteifigkeit des erfindungsgemäßen Tisches konserviert. Jedes Auflager für jede Portalführungsschiene kann aber auch durch Materialabnahme von dem jeweiligen Stranggussprofilabschnitt ausgebildet sein. Diese Ausbildung durch Materialabnahme kann konkret durch Abfräsen und/oder Abschleifen erfolgt sein. Jede Portalführungsschiene wird typischerweise auf ihr Auflager aufgeschraubt und kann zusätzlich mit diesem verklebt werden. Befestigungsschrauben für die Portalführungsschienen können in dafür verstärkt ausgebildete Bereiche des Profilquerschnitts des jeweiligen Stranggussprofilabschnitts eingreifen.

Zwischen seinen Stranggussprofilabschnitten kann zumindest der Oberrahmen des erfindungsgemäßen Tisches in horizontalen Richtungen ausgesteift sein. Dazu kann eine Versteifungsplatte und/oder können Querstreben und/oder Diagonalstreben an die Stranggussprofilabschnitte beispielsweise durch Anschweißen oder Anschrauben angebunden sein.

Das Flachbett des erfindungsgemäßen Tisches kann ebenfalls mehr- oder allseitig starr mit den Stranggussprofilabschnitten des Oberrahmens beispielsweise durch Anschweißen oder Anschrauben verbunden sein. Alternativ kann das Flachbett oder zumindest eine oben liegende Platte des Flachbetts in Festlagern und in dazu beabstandeten Loslagern mit horizontaler Beweglichkeit innerhalb des Oberrahmens an dem Oberrahmen gelagert sein. Mit Hilfe der Loslager wird verhindert, dass aus vertikalen Belastungen des Flachbetts oder aus beispielsweise thermisch bedingten Längenänderungen des Flachbetts oder dessen oben liegender Platte horizontale Kräfte auf die Stranggussprofilabschnitte des Oberrahmens resultieren, die durch den aus den Paneelelementen gebildeten Zwischenrahmen weniger gut abgestützt werden als unvermeidbare Vertikalkräfte.

Wie bereits eingangs dieser Beschreibung angesprochen wurde, kann das Flachbett des erfindungsgemäßen Tisches beispielsweise eine Vakuumspannplatte für plattenförmige Objekte, eine elektrostatische aufladbare Oberfläche für Papier oder andere bahnenförmige Objekte und/oder in einer Horizontalebene endende linienförmige Plattenabstützelemente aufweisen.

Der erfindungsgemäße Tisch kann sehr groß und trotzdem ausreichend formsteif sein. Konkret können die längeren der Stranggussprofilabschnitte des Oberrahmens eine Länge von mindestens 1,5 m oder auch von 2,0 m oder gar von 3,0 m aufweisen. Typischerweise werden die längeren der Stranggussprofilabschnitte des Oberrahmens aber nicht länger als 8 m sein. Das Tischgestell des erfindungsgemäßen Tisches kann insbesondere dann, wenn die Stranggussprofilabschnitte des Oberrahmens, die weiteren Stranggussprofilabschnitte des Unterrahmens und auch Paneelelemente aus Leichtmetalllegierungen ausgebildet sind, vergleichsweise leicht sein. Konkret kann das Tischgestell eine Masse von nicht mehr als 200 kg oder 150 kg oder auch 100 kg oder sogar 50 kg je 1 m² der miteinander multiplizierten Längen der beiden längeren und der beiden kürzeren Stranggussprofilabschnitte des Oberrahmens aufweisen. Das Produkt dieser Längen ist die von dem Oberrahmen überspannte Fläche.

Bei dem erfindungsgemäßen Verfahren zur Herstellung eines Tisches für eine Flachbettmaschine, der einen Oberrahmen, einen Unterrahmen und sich zwischen dem Oberrahmen und dem Unterrahmen erstreckende Paneelelemente aufweist und der optional ein erfindungsgemäßer Tisch sein kann, wird der Oberrahmen gebildet, indem mindestens zwei Stranggussprofilabschnitte, die Abschnitte eines Ein- oder Mehrhohlkammerstranggussprofils sind und die längs zwei einander gegenüberliegenden Seiten des Oberrahmens durchlaufen, starr miteinander verbundenen werden. Typischer Weise werden vier Stranggussprofilabschnitte, die längs aller vier Seiten des Oberrahmens durchlaufen, durch Verschweißen von Gehrungen miteinander verbunden. Mindestens an einem der Stranggussprofilabschnitte an einer der zwei einander gegenüberliegenden Seiten des Oberrahmens ist ein Auflager für eine Portalführungsschiene ausgebildet, oder ein solches Auflager für eine Portalführungsschiene wird unter Materialabnahme von dem einen der Stranggussprofilabschnitte ausgebildet. Dann wird der Oberrahmen aus den miteinander verbundenen Stranggussprofiabschnitten mit dem an dem einen der Stranggussprofilabschnitte ausgebildeten Auflager derart auf eine Richtbank aufgespannt, dass das Auflager einen vorgegeben Verlauf erhält. Dieser Verlauf ist typischer Weise linear und eben. Die Paneelelemente und der Unterrahmen werden anschließend mit dem auf die Richtbank aufgespannten Oberrahmen verbunden, um ein derart formsteifes Tischgestell auszubilden, dass das Auflager den vorgegeben Verlauf beibehält, wenn der Oberrahmen von der Richtbank abgenommen wird. Damit ist kein Nacharbeiten des Auflagers an dem fertigen Tischgestell erforderlich ist, das eine große Werkzeugmaschine mit hohem Portal erfordern würde.

Bei dem erfindungsgemäßen Verfahren kann jede Portalführungsschiene auf ihrem jeweiligen Auflager befestigt werden, zum Beispiel auf das Auflager aufgeschraubt werden, bevor der Oberrahmen auf die Richtbank aufgespannt wird. Dann kann mit der Richtbank unmittelbar dafür gesorgt werden, dass jede Portalführungsschiene den für sie gewünschten linearen Verlauf erhält.

Weiterhin kann bei dem erfindungsgemäßen Verfahren ein Flachbett des Tisches bereits in dem Oberrahmen gelagert werden und/oder der Oberrahmen zwischen den Stranggussprofilabschnitten bereits durch eine Versteifungsplatte und/oder Querstreben und/oder Diagonalstreben horizontal ausgesteift werden, bevor der Oberrahmen auf die Richtbank aufgespannt wird. So wird vermieden, dass diese Herstellungsschritte durch die Richtbank behindert werden oder ein erst nachträgliches Ausführen dieser Herstellungsschritte nach dem Wiederabnehmen des Oberrahmens von der Richtbank den gewünschten linearen Verlauf der Auflager bzw. der darauf angeordneten Portalführungsschienen gefährdet. Auch das Ausbilden des Auflagers oder der Auflager unter Materialabnahme von dem jeweiligen Stranggussprofilabschnitt kann gezielt erst nach dem Lagern des Flachbetts in dem Oberrahmen und/oder dem Aussteifen des Oberrahmens zwischen den Stranggussprofilabschnitten durchgeführt werden, um die Einflüsse dieser Herstellungsschritte auf den Verlauf des oder der Auflager möglichst vollständig vorweg zu nehmen und bereits bei dem Ausbilden des oder der Auflager auszugleichen.

Um das oder die Auflager unter Materialabnahme von dem jeweiligen Stranggussprofilabschnitt auszubilden, kann der Oberrahmen aus den miteinander verbundenen Stranggussprofilabschnitten auf ein Flachbett einer größeren Flachbettmaschine aufgespannt werden. Dabei reicht eine Flachbettmaschine mit einem niedrigen Portal von der Höhe des Oberrahmens aus.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine Seitenansicht eines erfindungsgemäßen Tisches.
- **Fig. 2**: ist eine Ansicht von oben auf den erfindungsgemäßen Tisch gemäß Fig. 1.
- **Fig. 3**: ist ein Vertikalschnitt durch Teile des erfindungsgemäßen Tisches gemäß Fig. 1 und 2.
- **Fig. 4**: ist ein Fig. 3 entsprechender Vertikalschnitt durch eine alternative Ausführungsform der Teile des erfindungsgemäßen Tisches.
- **Fig. 5**: ist ein Horizontalschnitt durch mehrere aneinander befestige Paneelelemente des Tisches gemäß den Fig. 1 und 2.
- **Fig. 6**: ist ein Horizontalschnitt durch ein Winkelelement des Tisches gemäß den Fig. 1 und 2.
- **Fig. 7**: ist ein Schnitt durch ein Blech mit einer Nut vor dem Ausbilden eines Paneelelements des erfindungsgemäßen Tisches durch Abkanten.
- **Fig. 8**: ist ein Schnitt durch ein Blech zur Herstellung eines Paneelelements für den erfindungsgemäßen Tisch durch Abkanten mit einer anders als in Fig. 8 ausgeformten Nut.
- **Fig. 9**: ist ein Horizontalschnitt durch den Stoßbereich von zwei aneinander befestigten Paneelelementen in einer gegenüber Fig. 5 abgewandelten Ausführungsform.
- **Fig. 10**: ist eine Ansicht von unten auf den erfindungsgemäßen Tisch gemäß den Fig. 1 und 2.
- **Fig. 11**: ist eine Fig. 10 entsprechende Ansicht einer anderen Ausführungsform des erfindungsgemäßen Tisches.
- **Fig. 12**: ist ein Vertikalschnitt durch ein Flachbett eines erfindungsgemäßen Tisches.
- **Fig. 13**: ist ein Vertikalschnitt durch eine andere Ausführungsform des Flachbetts als in Fig. 12.
- **Fig. 14**: ist ein Vertikalschnitt durch noch eine andere Ausführungsform des Flachbetts des erfindungsgemäßen Tisches; und
- **Fig. 15**: ist ein Blockdiagramm zum Ablauf des erfindungsgemäßen Verfahrens zur Herstellung eines Tisches für eine Flachbettmaschine.

### FIGURENBESCHREIBUNG

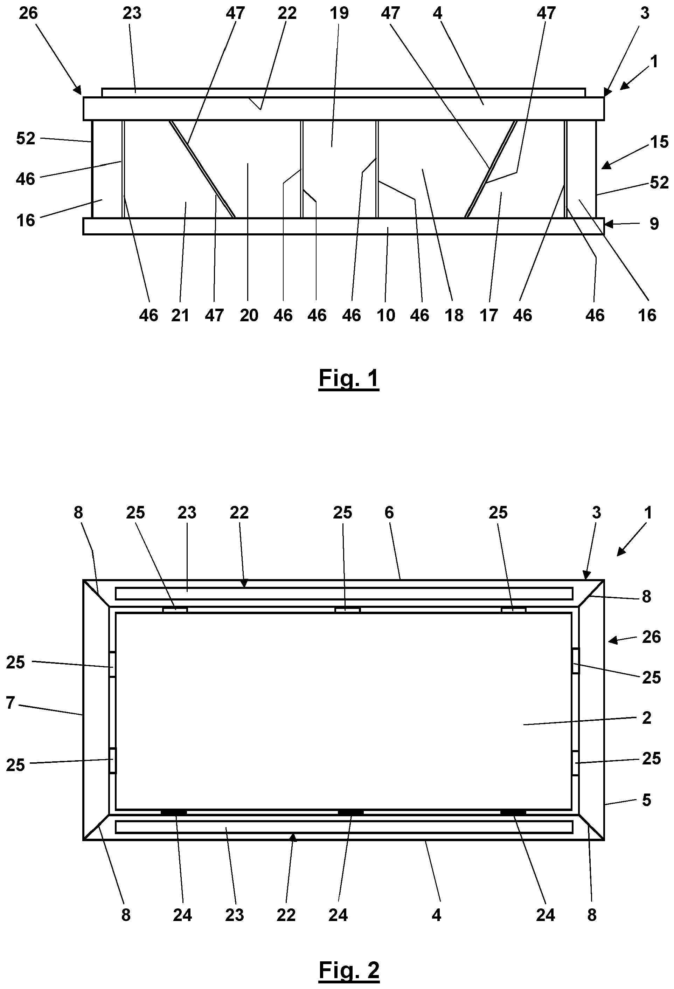

Der in den Fig. 1 und 2 dargestellte Tisch 1 ist ein Tisch für eine Flachbettmaschine und weist ein in der Ansicht von oben gemäß Fig. 2 sichtbares Flachbett 2 auf. Das Flachbett 2 ist innerhalb eines Oberrahmens 3 des Tisches angeordnet. Der Oberrahmen 3 ist aus vier Stranggussprofilabschnitten 4 bis 7 zusammengesetzt, die durch verschweißte Gehrungen 8 starr miteinander verbunden sind. Der Oberrahmen 3 ist in einem vertikalen Abstand über einem Unterrahmen 9 angeordnet, der direkt oder über hier nicht dargestellte Füße zum Aufstehen auf dem Boden ausgebildet ist. Der Unterrahmen 9 besteht aus weiteren Stranggussprofilabschnitten 10 bis 13, die durch verschweißte weitere Gehrungen 14 starr miteinander verbunden sind. In den Fig. 1 und 2 ist nur der Stranggussprofilabschnitt 10 des Unterrahmens 9 sichtbar. Die weiteren Stranggussprofilabschnitte 11 bis 13 des Unterrahmens und die Gehrungen 14 sind in anderen Figuren zu sehen. Zwischen dem Oberrahmen 3 und dem Unterrahmen 9 ist ein Zwischenrahmen 15 aus Paneelelementen 16 bis 21 ausgebildet, die untereinander und an den Stranggussprofilabschnitten 4 bis 7 des Oberrahmens und an den Stranggussprofilabschnitten 10 bis 13 des Unterrahmens befestigt sind. Der Oberrahmen 3, der Zwischenrahmen 15 und der Unterrahmen 9 bilden zusammen ein formsteifes Tischgestell 26.

An den längeren Stranggussprofilabschnitten 4 und 6 des Oberrahmens, die längs der Längsseiten des Flachbetts 2 verlaufen, sind Auflager 22 ausgebildet, entweder schon beim Herstellen der Stranggussprofilabschnitte 4 und 6 oder erst später unter Materialabnahme von den Stranggussprofilabschnitten 4 und 6, beispielsweise durch Fräsen und/oder Schleifen. Auf die Auflager 22 sind Portalführungsschienen 23 aufgelagert, deren Aufbau grundsätzlich bekannt ist und die hier nicht näher dargestellt sind. Das Flachbett 2 ist hier in drei Festlagern 24 an dem Stranggussprofilabschnitt 4 und in Loslagern 25 mit horizontaler Beweglichkeit an den anderen Stranggussprofilabschnitten 5 bis 7 des Oberrahmens 3 gelagert. Auch starke Belastungen des Flachbetts 2 führen daher nicht zu horizontalen Zugkräften auf die Stranggussprofilabschnitte 4 bis 7. Alternativ kann selektiv eine oben liegende Platte des Flachbetts 2 in wenigen Festlagern 24 und mehreren Loslagern 25 in dem Oberrahmen gelagert sein, damit sich thermisch bedingte Längenänderungen dieser oben liegender Platte nicht in horizontale Verformungen des Oberrahmens 3 auswirken.

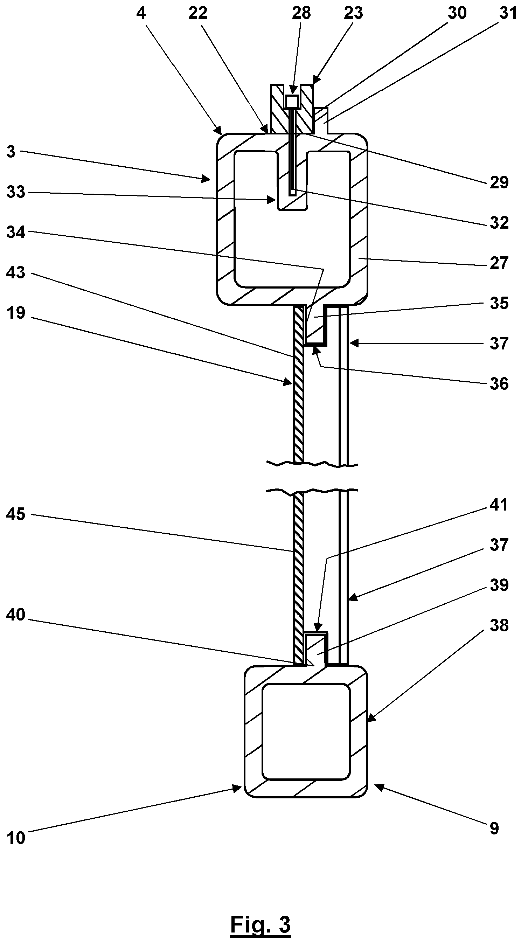

Der Vertikalschnitt gemäß **Fig. 3** zeigt den als Abschnitt aus einem Einhohlkammerstranggussprofil 27 ausgebildeten Stranggussprofilabschnitt 4 des Oberrahmens 3, bei dem die Portalführungsschiene 23 mit Schrauben 28 auf das Auflager 22 aufgeschraubt ist. Das Auflager 22 weist hier sowohl eine horizontale Auflagerfläche 29 als auch eine vertikale Anlagefläche 30 für die Portalführungsschiene 23 auf. Die Anlagefläche 30 ist an einem Fortsatz 31 des Einhohlkammerstranggussprofils 27 ausgebildet. Die Schrauben 28 greifen in Gewindebohrungen 32 in einem verstärkt ausgebildeten Bereich 33 des Einhohlkammerstranggussprofils 27 ein. Die Paneelelemente, hier das Paneelelement 19, sind mit ihrem oberen Ende 43 an einer vertikalen Anschlagfläche 34 an einem weiteren Fortsatz 35 des Einhohlkammerstranggussprofils 27 abgestützt und befestigt. Die Befestigung kann insbesondere durch Verschweißen oder mit Hilfe von Schweißperlen oder auch durch Verkleben erfolgt sein. Das Paneelelement 19 ist dreidimensional ausgeformt, wie noch im Zusammenhang mit den folgenden Figuren näher erläutert werden wird. Dabei weist das Paneelelement 19 in seinem oberen Ende 43 eine Nut 36 auf, in die der Fortsatz 35 eingreift, so dass sich das Paneelelement 19 mit seitlichen Randbereichen 37 auch auf der Rückseite des Fortsatzes 35 erstreckt. Die Befestigung des unteren Endes 45 des Paneelelements 19 an dem Stranggussprofilabschnitt 10 des Unterrahmens 9 ist ähnlich ausgeführt. Der Stranggussprofilabschnitt 10 ist ebenfalls ein Abschnitt eines Einhohlkammerstranggussprofils 38 mit einem Fortsatz 39, der eine vertikal verlaufende Anschlagfläche 40 für das untere Ende 45 des Paneelelements 19 ausbildet und in eine Nut 41 in dem Paneelelement 19 eingreift. Die Stranggussprofilabschnitte 4 bis 7 des Oberrahmens 3 oder die weiteren Stranggussprofilabschnitte 10 bis 13 des Unterrahmens 9 können auch als Abschnitte eines Mehrhohlkammerstranggussprofils mit einer komplexeren Querschnittschaltung als in Fig. 3 gezeigt ausgebildet sein.

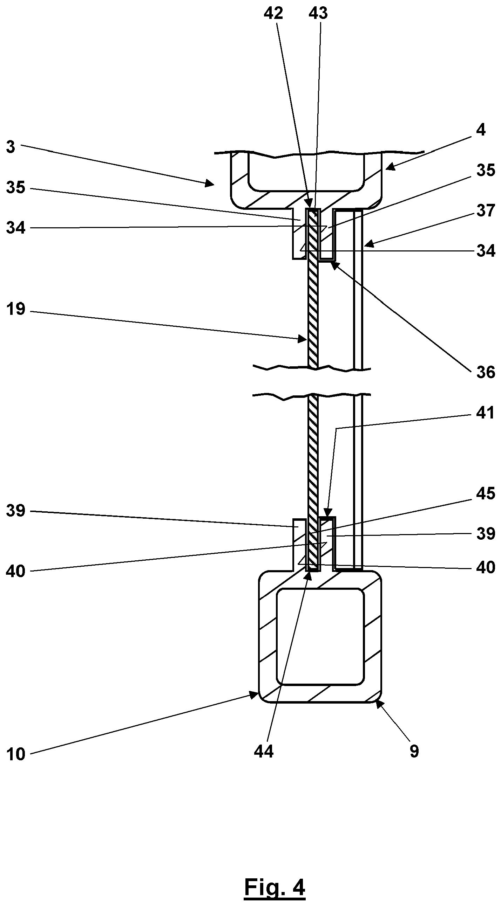

**Fig. 4** zeigt eine alternative Ausgestaltung des Stranggussprofilabschnitts 4 und des weiteren Stranggussprofilabschnitts 10 zum Befestigen des Paneelelements 19. Hier bildet der Stranggussprofilabschnitt 4 eine Nut 42 zwischen zwei Fortsätzen 35 mit vertikalen Ausrichtflächen 34 aus. In der Nut 42 ist das obere Ende 43 des Paneelelements geführt und befestigt. Entsprechend ist an dem Stranggussprofilabschnitt 10 des Unterrahmens 9 eine Nut 44 zwischen zwei Fortsätzen 39 mit vertikalen Anschlagflächen 40 für das Paneelelement 10 ausgebildet. Das untere Ende 45 des Paneelelements 10 ist in dieser Nut 44 geführt und befestigt. Auch gemäß Fig. 4 weist das Paneelelement 10 seinerseits Nuten 36 und 41 auf und erstreckt sich mit seinen seitlichen Randbereichen 37 über die auf der Innenseite des Oberrahmens 3 und des Unterrahmens 9 angeordneten Fortsätze 35 und 39 hinaus.

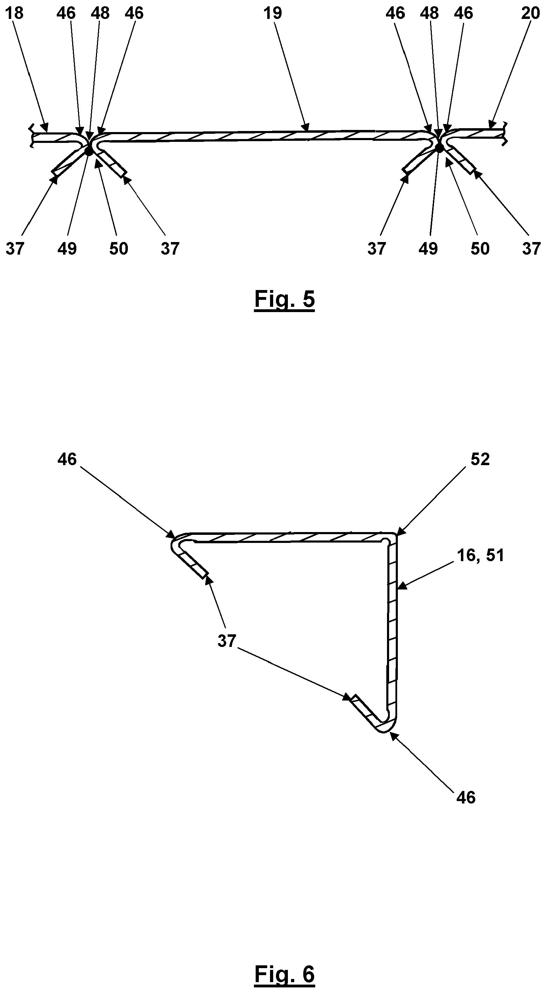

**Fig. 5** ist ein Horizontalschnitt durch die aneinander befestigten Paneelelemente 18, 19 und 20. Die Paneelelemente weisen jeweils zwischen dem Oberrahmen 3 und dem Unterrahmen 9 durchlaufende Abkantungen 46, 47 auf, siehe Fig. 1. An diesen Abkantungen 46, 47 gehen die Paneelelemente in die abgewinkelten seitlichen Randbereiche 37 über. Über die Abkantungen 46, 47 stoßen benachbarte Paneelelemente 16 bis 21 aneinander an, und in diesen Stoßbereichen 48 sind sie gemäß Fig. 5 durch Schweißperlen 49 miteinander verbunden, wobei die Schweißperlen 49 am Grund von zwischen den Randbereichen 37 gebildeten Kerben 50 angeordnet sind.

**Fig. 6** zeigt eines von vier Paneelelementen 16 des Tisches 1 gemäß Fig. 1, das als Winkelelement 51 ausgebildet ist und sich über eine Ecke des Tisches hinweg erstreckt. Neben randseitigen Abkantungen 46 weist das Winkelelement 51 eine zentrale Abkantung 52 oder Umbiegung auf, die längs der jeweiligen Ecke des Tisches 1 verläuft.

Neben den vertikal verlaufenden Abkantungen 46 weisen die Paneelelemente 17, 18, 20 und 21 auch geneigt zur horizontal verlaufende geradlinige Abkantungen 47 auf, siehe Fig. 1. Während die Abkantungen 46 dem Paneelelement 16 bis 21 Vertikalträgerfunktionen verleihen, verleihen die Abkantungen 47 den Paneelelementen 17, 18, 20 und 21 Diagonalstrebenfunktion zur Aussteifung des Tischgestells 26 zwischen dem Oberrahmen 3 und dem Unterrahmen 9.

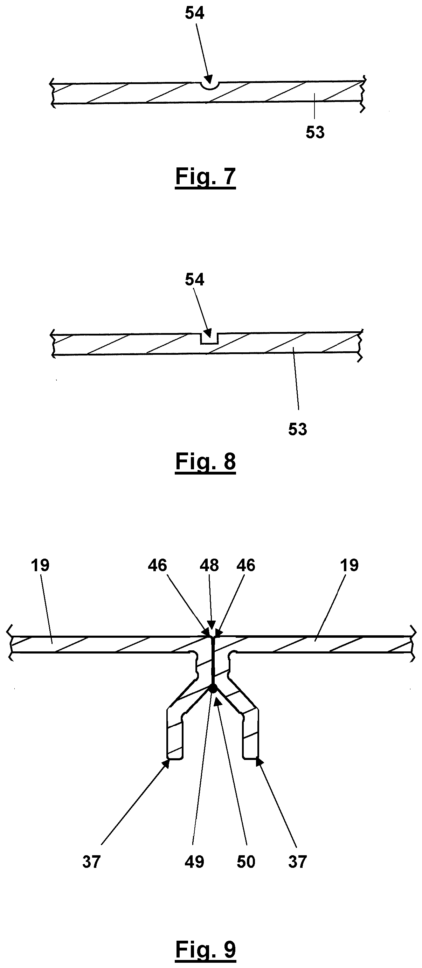

**Fig. 7** zeigt ein Blech 53 mit einer geradlinigen, hier V-förmigen Nut 54. Diese Nut 54 erleichtert die Ausbildung einer der Abkantungen 46, 47, wenn die angrenzenden Bereiche 53 des Blechs um die Nut 54 herum abgekantet werden, wobei die Nut 54 auf die Innenseite der Abkantung gelangt. Die mit der Nut 54 verbundene Schwächung der Dicke des Blechs 53 reduziert die maximale Verformung des Materials des Blechs 53 im Bereich der Abkantung, insbesondere bei größeren Materialstärken des Blechs 53.

**Fig. 8** zeigt ein Blech 53 mit einer Nut 54, die hier von rechteckigem Querschnitt ist, um die Ausbildung einer Abkantung bei der Herstellung eines Paneelelements aus dem Blech 53 zu erleichtern. Weitere Formen der Nut 54, wie beispielsweise einer Halbkreisform sind möglich.

Alternativ zur Ausbildung der Abkantungen 46 und 47 der Paneelelemente 16 bis 21 durch Umbiegen eines Blechs 53 können die Paneelelemente mit zueinander parallelen Abkantungen 46 auch als Flachprofilabschnitte mit direkt ausgeformten abgewinkelten Randbereichen 37 ausgebildet sein. Ein Beispiel hierfür ist in **Fig. 9** skizziert. Auch in der Ausführungsform gemäß Fig. 9 sind die über ihre Abkantungen 46 aneinander anstoßenden Paneelelemente 19 durch Schweißperlen 49 miteinander verbunden, die in eine Kerbe 50 zwischen den Randbereichen 37 auf der Rückseite des Stoßbereichs 48 der Abkantungen 46 eingebracht sind. In Fig. 9 sind beide aneinander anstoßenden Paneelelemente 19 solche mit parallelen Abkantungen 46, von denen es in Fig. 1 nur das eine Paneelelement 19 gibt.

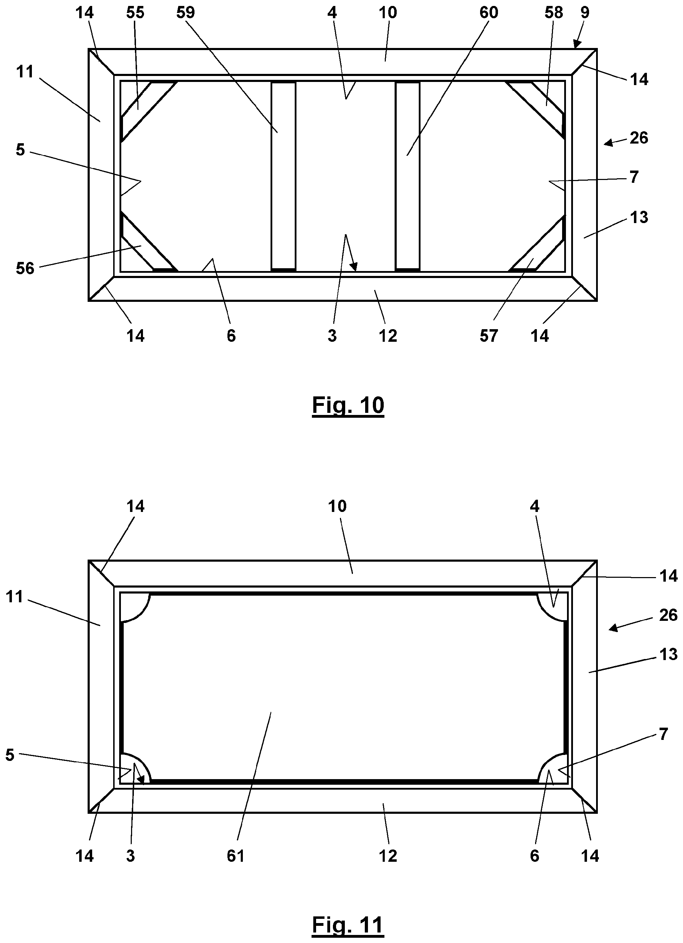

**Fig. 10** zeigt das Tischgestell 26 des Tisches gemäß den Fig. 1 und 2 in einer Ansicht von unten mit Blick auf den Unterrahmen 9. Zu sehen sind Diagonalstreben 55 bis 58 und Querstreben 59 und 60, die zwischen den hier nur teilweise sichtbaren Stranggussprofilabschnitten 4 bis 7 des Oberrahmens 3 verlaufen. Dabei sind die Diagonalstreben 55 bis 58 jeweils zwischen orthogonal zueinander verlaufenden und die Querstreben 59 und 60 jeweils zwischen parallel zueinander verlaufenden Stranggussprofilabschnitten 4 bis 7 angeordnet und mit diesen verschweißt. Mit den Diagonalstreben 55 bis 58 und die Querstreben 59 und 60 wird der Oberrahmen in der Horizontalen ausgesteift.

Eine alternative Aussteifung des Oberrahmens durch eine Versteifungsplatte 61, die an alle Stranggussprofilabschnitte 4 bis 7 des Oberrahmens 3 angeschweißt ist, zeigt **Fig. 11** in einer Fig. 10 entsprechenden Ansicht des Untergestells 26 von unten.

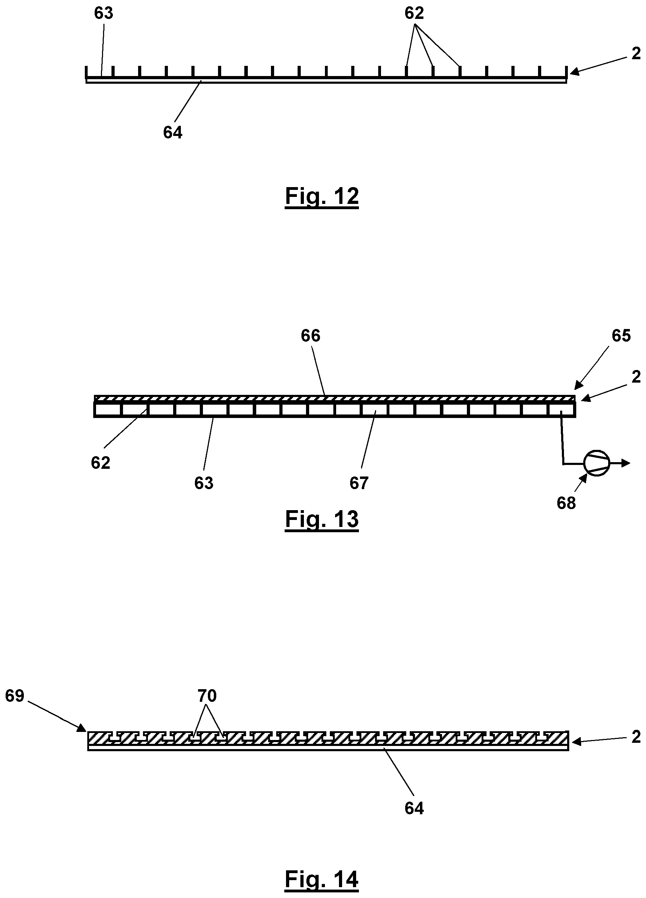

**Fig. 12** zeigt eine Ausführungsform des Flachbetts 2 mit zueinander parallel verlaufenden linienförmigen Plattenabstützelementen 62. Die Abstützelemente 62 stehen von einer Grundplatte 63 nach oben ab, die auf ihrer Unterseite durch Querrippen 64 versteift ist.

In der Ausführungsform gemäß **Fig. 13** ist das Flachbett 2 als Vakuumspannplatte 65 ausgebildet. Die Vakuumspannplatte 65 weist zusätzlich zu der Grundplatte 63 und der linienförmigen Plattenabstützelementen 62 gemäß Fig. 12 eine auf den linienförmigen Plattenabstützelementen angeordnete luftdurchlässige Platte 66 auf. Zwischen der Platte 66 und der Grundplatte 63 ist ein Unterdruckraum 67 ausgebildet, der mit Hilfe einer Vakuumpumpe 68 evakuiert wird. Der Unterdruckraum 67 ist bis auf die begrenzte Luftdurchlässigkeit der Platte 66 abgedichtet. So werden auf die Platte 66 aufgelegte plattenförmige Objekte durch Unterdruck auf der Platte 66 gespannt. Mit in Fig. 13 nicht dargestellten Querrippen 64 könnte auch die Vakuumspannplatte 65 weiter ausgesteift werden.

Das Flachbett 2 gemäß **Fig. 14** weist eine Spannplatte 69 mit T-förmigen Nuten 70 zur Befestigung von nicht dargestellten Spannelementen auf grundsätzlich bekannte Weise auf. Die Spannplatte 69 ist durch Querrippen 64 auf ihrer Unterseite ausgesteift.

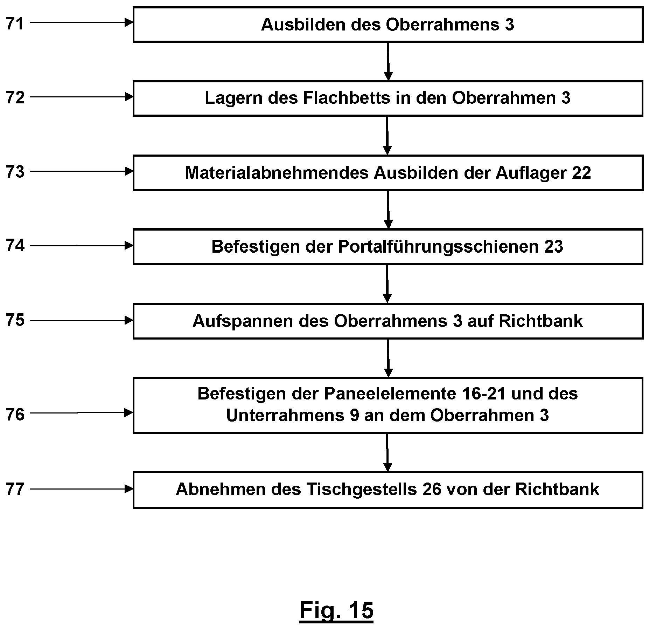

Das in dem Blockdiagramm gemäß **Fig. 15** illustrierte erfindungsgemäße Verfahren beginnt in einem Schritt 71 mit dem Ausbilden des Oberrahmens 3 durch miteinander Verschweißen der Stranggussprofilabschnitte 4 bis 7. Dann wird in einem Schritt 72 das Flachbett 2 in dem Oberrahmen gelagert. In diesem Schritt kann auch eine Versteifung des Oberrahmens 3 mit einer Versteifungsplatte 61 und/oder Querstreben 59, 60 und/oder Diagonalstreben 55-58 vorgenommen werden. Dann können in einem grundsätzlich optionalen Schritt 73 die Auflager 22 für die Portalführungsschienen 23 unter Materialabnahme von den Stranggussprofilabschnitten 4 und 6 ausgebildet werden. Dies kann auf einer größeren Flachbettmaschine geschehen, deren Flachbett ausreichend groß ist, um den Oberrahmen 3 aufzunehmen. Anschließend werden in einem Schritt 74 die Portalführungsschienen 23 beispielsweise durch Anschrauben auf den Auflagern 22 befestigt. In einem nachfolgenden Schritt 75 wird der Oberrahmen 3 auf eine Richtbank aufgespannt und zwar so, dass die Auflager 22 und die darauf befestigten Portalführungsschienen 23 geradlinig ausgerichtet sind. Dazu liegen die Auflager 22 über die Portalführungsschienen 23 an dazu komplementären Richtflächen der Richtbank an. Beim Aufspannen des Oberrahmens 3 auf die Richtbank wird der Oberrahmen 3 typischerweise verformt, weil sich der Oberrahmen 3 bereits bei seinem Ausbilden im Schritt 71 und auch im Laufe der weiteren Schritte 72 bis 74 regelmäßig gegenüber seiner Idealform verformt hat, insbesondere wenn beim materialabnehmenden Ausbilden der Auflager 22 im Schritt 72 Spannungen freigesetzt wurden, die beim Abnehmen des Oberrahmens 3 von dem Flachbett der größeren Flachbettmaschine nicht mehr abgestützt sind und so zu einer Verformung des freien Oberrahmens 3 führen. In einem Schritt 76 erfolgt die Ausbildung des Tischgestells 26 durch Befestigung der Paneelelemente 16 und 21 und des Unterrahmens 9 an dem Oberrahmen 3. Es versteht sich, dass zuvor der Unterrahmen 9 aus den weiteren Stranggussprofilabschnitten 10 bis 13 ausgebildet wurde. Durch die Ausbildung des Tischgestells 26 wird der Oberrahmen 3 in seiner gewünschten Form mit dem geradlinigen Verlauf der Auflager 22 und der Portalführungsschienen 23 fixiert, und diese Fixierung bleibt erhalten, wenn in einem Schritt 77 das Tischgestell 26 von der Richtbank abgenommen wird, so dass die Geradlinigkeit der Auflager 22 und der Portalführungsschienen 23 nicht mehr durch die Richtbank gewährleistet ist. Grundsätzlich kann der Schritt 74 des Befestigens der Portalführungsschienen 23 auf die Auflager 22 auch erst nach dem Abnehmen des Oberrahmens 3 von der Richtbank, d. h. dem Schritt 77 erfolgen. Bei Lagerung des Flachbetts 2 in dem Oberrahmen 3 in Festlagern 24 und Loslagern 25 kann auch der Schritt 72 erst anschließend an den Schritt 77 erfolgen. Das Tischgestell 26 kann - ein- oder ausschließlich der Auflagern 22 und/oder der Portalführungsschienen 23 und/oder des Flachbetts 2 - als Ganzes lackiert werden.

### BEZUGSZEICHENLISTE

- 1: Tisch
- 2: Flachbett
- 3: Oberrahmen
- 4-7: Stranggussprofilabschnitt
- 8: Gehrung
- 9: Unterrahmen
- 10-13: weiterer Stranggussprofilabschnitt
- 14: Gehrung
- 15: Zwischenrahmen
- 16-21: Paneelelement
- 22: Auflager
- 23: Portalführungsschiene
- 24: Festlager
- 25: Loslager
- 26: Tischgestell
- 27: Einhohlkammerstranggussprofil
- 28: Schraube
- 29: Auflagerfläche
- 30: Anlagefläche
- 31: Fortsatz
- 32: Gewindebohrung
- 33: Bereich
- 34: Anschlagfläche
- 35: Fortsatz
- 36: Nut
- 37: Randbereich
- 38: Einhohlkammerstranggussprofil
- 39: Fortsatz
- 40: Anschlagfläche
- 41-42: Nut
- 43: Oberes Ende
- 44: Nut
- 45: Unteres Ende
- 46: Abkantung
- 47: Abkantung
- 48: Stoßbereich
- 49: Schweißperle
- 50: Kerbe
- 51: Winkelelement
- 52: Abkantung
- 53: Blech
- 54: Nut
- 55-58: Diagonalstrebe
- 59-60: Querstrebe
- 61: Versteifungsplatte
- 62: Plattenabstützelement
- 63: Grundplatte
- 64: Querrippe
- 65: Vakuumspannplatte
- 66: Begrenzt luftdurchlässige Platte
- 67: Unterdruckraum
- 68: Vakuumpumpe
- 69: Spannplatte
- 70: T-förmige Nut
- 71-77: Schritt

## Patentansprüche

1. Tisch (1) für eine Flachbettmaschine mit
- einem horizontal ausgerichteten Flachbett (2),
- einem Oberrahmen (3),
- einem am Boden aufstehenden Unterrahmen (9) und
- sich zwischen dem Oberrahmen (3) und dem Unterrahmen (9) erstreckenden Paneelelementen (16-21),
- wobei der Oberrahmen (3) mit mindestens zwei Profilabschnitten gebildet ist, die längs zwei einander gegenüberliegenden Seiten des Oberrahmens (3) durchlaufen und starr miteinander verbunden sind,
- wobei der Unterrahmen (9) mit mindestens zwei weiteren Profilabschnitten gebildet ist, die längs zwei einander gegenüberliegenden Seiten des Unterrahmens (9) durchlaufen und starr miteinander verbunden sind,
- wobei an den Unterseiten der Profilabschnitte des Oberrahmens (3) vertikal verlaufende Anschlagflächen (34) für obere Enden (43) der Paneelelemente (16-21) ausgeformt sind,
- wobei an Oberseiten der weiteren Profilabschnitte des Unterrahmens (9) weitere vertikal verlaufende Anschlagflächen (40) für untere Enden der Paneelelemente (16-21) ausgeformt sind, und
- wobei die Paneelelemente (16-21) derart ausgebildet und an dem Unterrahmen (9) und dem Oberrahmen (3) sowie aneinander befestigt sind, dass aus dem Oberrahmen (3), den Paneelelementen (16-21) und dem Unterrahmen (9) ein formsteifes Tischgestell (26) gebildet ist,
**dadurch gekennzeichnet,**
- **dass** der Oberrahmen (3) das Flachbett (2) umschließt,
- **dass** die Profilabschnitte Stranggussprofilabschnitte (4-7) und die weiteren Profilabschnitte weitere Stranggussprofilabschnitte (10-13) sind, wobei zumindest die Stranggussprofilabschnitte (4-7) Abschnitte eines Ein- oder Mehrhohlkammerstranggussprofils (27, 38) sind; und
- **dass** mindestens an einem der Stranggussprofilabschnitte (4-7) an einer der zwei einander gegenüberliegenden Seiten des Oberrahmens (3) ein Auflager (22) für eine Portalführungsschiene (23) ausgebildet ist.

2. Tisch (1) nach Anspruch 1, **dadurch gekennzeichnet, dass** die vertikal verlaufenden Anschlagflächen (34) in Nuten (42) in den Unterseiten der Stranggussprofilabschnitte (4-7), wobei die Nuten (42) die oberen Enden (43) der Paneelelemente (16-21) aufnehmen, und/oder die weiteren vertikal verlaufenden Anschlagflächen (40) in weiteren Nuten (44) in den Oberseiten der weiteren Stranggussprofilabschnitte (10-13), wobei die weiteren Nuten (44) die unteren Enden (45) der Paneelelemente (16-21) aufnehmen, angeordnet sind.

3. Tisch (1) nach Anspruch 1 oder 2, **dadurch gekennzeichnet, dass** der Oberrahmen mit vier längs seiner vier Seiten durchlaufenden und in seinen vier Ecken starr miteinander verbundenen Stranggussprofilabschnitten (4-7) gebildet ist und/oder der Unterrahmen (9) mit längs seiner vier Seiten durchlaufenden und in seinen vier Ecken starr miteinander verbundenen weiteren Stranggussprofilabschnitten (10-13) gebildet ist, wobei die Stranggussprofilabschnitte (4-7) und/oder die weiteren Stranggussprofilabschnitte (10-13) vorzugsweise durch verschweißte Gehrungen (8, 13) miteinander verbunden sind.

4. Tisch (1) nach Anspruch 3, **dadurch gekennzeichnet, dass** die aneinander befestigten Paneelelemente (16-21) einen in der Horizontalen umlaufenden Zwischenrahmen (15) ausbilden.

5. Tisch (1) nach einem der vorhergehenden Ansprüche, **dadurch gekennzeichnet, dass** das Ein- oder Mehrhohlkammerstranggussprofil (27, 38) aus einer schweißbaren Leichtmetalllegierung stranggegossen ist.

6. Tisch (1) nach einem der vorhergehenden Ansprüche, **dadurch gekennzeichnet, dass** die Paneelelemente (16-21) an dem Oberrahmen (3) und/oder dem Unterrahmen (9) sowie aneinander durch Schweißpunkte oder Schweißperlen (49) und/oder durch Verkleben befestigt sind.

7. Tisch (1) nach einem der vorhergehenden Ansprüche, **dadurch gekennzeichnet, dass** die Paneelelemente (16-21) Blechformteile oder Flachprofilabschnitte mit zwischen dem Oberrahmen (3) und dem Unterrahmen (9) durchlaufenden Abkantungen (46, 47) sind.

8. Tisch (1) nach Anspruch 7, **dadurch gekennzeichnet,**
- **dass** die Abkantungen (46, 47) Abkantungen (46, 47) mit Kantenwinkel ≥ 100°, vorzugsweise ≥ 110° umfassen und/oder
- **dass** die Abkantungen (46, 47) mit Kantenlinien umfassen, die unter Winkeln ≥ 20°, vorzugsweise ≥ 30°, zur Vertikalen verlaufen.

9. Tisch (1) nach einem der vorhergehenden Ansprüche, **dadurch gekennzeichnet, dass** jedes Auflager (22) unter Materialabnahme von dem jeweiligen Stranggussprofilabschnitt (4-7) ausgebildet ist, wobei jede Portalführungsschiene (23) vorzugsweise auf ihr Auflager (22) aufgeschraubt ist.

10. Tisch (1) nach einem der vorhergehenden Ansprüche, **dadurch gekennzeichnet, dass** der Oberrahmen (3) zwischen seinen Stranggussprofilabschnitten (4-7) durch eine Versteifungsplatte (61) und/oder Querstreben (59, 60) und/oder Diagonalstreben (55-58) horizontal ausgesteift ist.

11. Tisch (1) nach einem der vorhergehenden Ansprüche, **dadurch gekennzeichnet, dass** das Flachbett (2) oder eine oben liegende Platte des Flachbetts (2) in Festlagern (24) und dazu beabstandeten Loslagern (25) mit horizontaler Beweglichkeit innerhalb des Oberrahmens (3) an dem Oberrahmen (3) gelagert ist.

12. Verfahren zur Herstellung eines Tisches (1) für eine Flachbettmaschine, der
- einen Oberrahmen (3),
- einen Unterrahmen (9) und
- sich zwischen dem Oberrahmen (3) und dem Unterrahmen (9) erstreckende Paneelelemente (16-21)
aufweist und der optional die weiteren Merkmale eines der vorhergehenden Patentansprüche aufweist,
- wobei der Oberrahmen (3) gebildet wird, indem mindestens zwei Profilabschnitte, die längs zwei einander gegenüberliegenden Seiten des Oberrahmens (3) durchlaufen, starr miteinander verbundenen werden,
**dadurch gekennzeichnet,**
- **dass** die Profilabschnitte Stranggussprofilabschnitte (4-7) sind, wobei die Stranggussprofilabschnitte (4-7) Abschnitte eines Ein- oder Mehrhohlkammerstranggussprofils (27, 38) sind;
- **dass** mindestens an einem der Stranggussprofilabschnitte (4-7) an einer der zwei einander gegenüberliegenden Seiten des Oberrahmens (3) ein Auflager (22) für eine Portalführungsschiene (23) ausgebildet ist oder unter Materialabnahme von dem einen der Stranggussprofilabschnitte (4-7) ausgebildet wird,
- **dass** der Oberrahmen (3) aus den miteinander verbundenen Stranggussprofilabschnitten (4-7) mit dem mindestens an dem einen der Stranggussprofilabschnitte (4-7) ausgebildeten Auflager (22) derart auf eine Richtbank aufgespannt wird, dass das Auflager (22) einen vorgegeben Verlauf erhält, und
- **dass** die Paneelelemente (16-21) und der Unterrahmen (9) mit dem auf die Richtbank aufgespannten Oberrahmen (3) verbunden werden, um ein derart formsteifes Tischgestell auszubilden, dass das Auflager (22) den vorgegeben Verlauf beibehält, wenn der Oberrahmen von der Richtbank abgenommen wird.

13. Verfahren nach Anspruch 12, **dadurch gekennzeichnet, dass** die Portalführungsschiene (23) auf dem Auflager (22) befestigt wird, vorzugsweise auf das Auflager (22) aufgeschraubt wird, bevor der Oberrahmen (3) auf die Richtbank aufgespannt wird.

14. Verfahren nach Anspruch 12 oder 13, **dadurch gekennzeichnet, dass** ein Flachbett (2) des Tisches (1) in dem Oberrahmen (3) gelagert wird und/oder dass der Oberrahmen (3) zwischen den Stranggussprofilabschnitten (4-7) durch eine Versteifungsplatte (61) und/oder Querstreben (59, 60) und/oder Diagonalstreben (55-58) horizontal ausgesteift wird, bevor der Oberrahmen (3) auf die Richtbank aufgespannt wird.

15. Verfahren nach einem der Ansprüche 12 bis 14, **dadurch gekennzeichnet, dass** der Oberrahmen (3) aus den miteinander verbundenen Stranggussprofilabschnitten (4-7) auf ein Flachbett einer größeren Flachbettmaschine aufgespannt wird, um das Auflager (22) unter Materialabnahme von dem einen der Stranggussprofilabschnitte (4-7) auszubilden.

## Claims

1. Table (1) for a flat bed machine comprising
- a horizontally aligned flat bed (2),
- an upper frame (3),
- a lower frame (9) resting on the ground, and
- panel elements (16-21) extending between the upper frame (3) and the lower frame (9),
- wherein the upper frame (3) is formed with at least two profile sections which run along two opposite sides of the upper frame (3) and are rigidly connected to one another,
- wherein the lower frame (9) is formed with at least two further profile sections which run along two opposite sides of the lower frame (9) and are rigidly connected to one another,
- wherein vertically extending abutment surfaces (34) for upper ends (43) of the panel elements (16-21) are formed on the undersides of the profile sections of the upper frame (3),
- further vertically extending abutment surfaces (40) for lower ends of the panel elements (16-21) being formed on the upper sides of the further profile sections of the lower frame (9), and
- the panel elements (16-21) being formed and fastened to the lower frame (9) and the upper frame (3) and to one another in such a way that a dimensionally stable table frame (26) is formed of the upper frame (3), the panel elements (16-21) and the lower frame (9),
**characterized**
- **in that** the upper frame (3) encloses the flat bed (2),
- **in that** the profile sections are continuous-cast profile sections (4-7) and the further profile sections are further continuous-cast profile sections (10-13), at least the continuous-cast profile sections (4-7) being sections of a single- or multi-chamber continuous-cast profile (27, 38); and
- **in that** a support (22) for a portal guide rail (23) is formed on at least one of the continuous casting profile sections (4-7) on one of the two opposite sides of the upper frame (3).

2. Table (1) according to claim 1, **characterized in that** the vertically extending abutment surfaces (34) are located in grooves (42) in the lower sides of the continuous casting profile sections (4-7), the grooves (42) receiving the upper ends (43) of the panel elements (16-21), and/or the further vertically extending abutment surfaces (40) are located in further grooves (44) in the upper sides of the further continuous casting profile sections (10-13), wherein the further grooves (44) receive the lower ends (45) of the panel elements (16-21).

3. Table (1) according to claim 1 or 2, **characterized in that** the upper frame is formed with four continuous-cast profile sections (4-7) running along its four sides and rigidly connected to one another in its four corners and/or the lower frame (9) is formed with further continuous-cast profile sections (10-13) running along its four sides and rigidly connected to one another in its four corners, wherein the continuous-cast profile sections (4-7) and/or the further continuous-cast profile sections (10-13) are preferably connected to one another by welded miters (8, 13).

4. Table (1) according to claim 3, **characterized in that** the panel elements (16-21) fastened to one another form an intermediate frame (15) running around in the horizontal.

5. Table (1) according to any of the preceding claims, **characterized in that** the single- or multi-chamber continuous casting profile (27, 38) is continuously cast from a weldable light metal alloy.

6. Table (1) according to any of the preceding claims, **characterized in that** the panel elements (16-21) are attached to the upper frame (3) and/or the lower frame (9) and to each other by spot welds or welding beads (49) and/or by gluing.

7. Table (1) according to any of the preceding claims, **characterized in that** the panel elements (16-21) are shaped sheet metal parts or flat profile sections with folded edges (46, 47) running through between the upper frame (3) and the lower frame (9).

8. Table (1) according to claim 7, **characterized**
- **in that** the folded edges (46, 47) comprise folded edges (46, 47) with an edge angle ≥ 100°, preferably ≥ 110°, and/or
- **in that** the folded edges (46, 47) comprise edge lines which run at angles ≥ 20°, preferably ≥ 30°, to the vertical.

9. Table (1) according to any of the preceding claims, **characterized in that** each support (22) is formed by removing material from the respective continuous casting profile section (4-7), each portal guide rail (23) preferably being screwed onto its support (22).

10. Table (1) according to any of the preceding claims, **characterized in that** the upper frame (3) is horizontally stiffened between its continuous casting profile sections (4-7) by a stiffening plate (61) and/or cross struts (59, 60) and/or diagonal struts (55-58).

11. Table (1) according to any of the preceding claims, **characterized in that** the flat bed (2) or an upper plate of the flat bed (2) is mounted to the upper frame (3) in fixed bearings (24) and floating bearings (25) spaced therefrom with horizontal mobility within the upper frame (3).

12. Method of manufacturing a table (1) for a flat bed machine, which comprises
- a upper frame (3),
- a lower frame (9), and
- panel elements (16-21) extending between the upper frame (3) and the lower frame (9) and which optionally comprises the further features of any of the preceding claims,
- wherein the upper frame (3) is formed in that at least two profile sections which extend along two opposite sides of the upper frame (3) are rigidly connected together,
**characterized**
- **in that** the profile sections are continuous-cast profile sections (4-7) and the further profile sections are further continuous-cast profile sections (10-13), at least the continuous-cast profile sections (4-7) being sections of a single- or multi-chamber continuous-cast profile (27, 38);
- **in that** a support (22) for a portal guide rail (23) is formed on at least one of the continuous-cast profile sections (4-7) on one of the two opposing sides of the upper frame (3), or is formed by removing material from the one of the continuous-cast profile sections (4-7),
- **in that** the upper frame (3) made of the interconnected continuous-cast profile sections (4-7) with the support (22) formed at least on the one of the continuous-cast profile sections (4-7) is clamped onto a straightening bench in such a way that the support (22) is given a predetermined course, and
- **in that** the panel elements (16-21) and the lower frame (9) are connected to the upper frame (3) clamped onto the straightening bench in order to form a dimensionally rigid table frame such that the support (22) retains the predetermined course when the upper frame is removed from the straightening bench.

13. Method according to claim 12, **characterized in that** the portal guide rail (23) is fastened to the support (22), preferably screwed onto the support (22), before the upper frame (3) is clamped onto the straightening bench.

14. Method according to claim 12 or 13, **characterized in that** a flat bed (2) of the table (1) is supported in the upper frame (3) and/or **in that** the upper frame (3) is horizontally braced between the continuous casting profile sections (4-7) by a stiffening plate (61) and/or cross struts (59, 60) and/or diagonal struts (55-58) before the upper frame (3) is clamped onto the straightening bench.

15. Method according to any of claims 12 to 14, **characterized in that** the upper frame (3) made of the interconnected continuous casting profile sections (4-7) is clamped onto a flat bed of a larger flat bed machine in order to form the support (22) by removing material from one of the continuous casting profile sections (4-7).

## Revendications

1. Table (1) pour une machine à plateau plat avec
- un plateau plat (2) orienté horizontalement,
- un cadre supérieur (3),
- un cadre inférieur (9) reposant sur le sol et
- des éléments de panneau (16-21) s'étendant entre le cadre supérieur (3) et le cadre inférieur (9),
- le cadre supérieur (3) étant formé d'au moins deux sections de profilé qui s'étendent le long de deux côtés opposés du cadre supérieur (3) et sont reliées rigidement entre elles,
- le cadre inférieur (9) étant formé d'au moins deux autres sections de profilé qui s'étendent le long de deux côtés opposés du cadre inférieur (9) et sont reliées rigidement entre elles,
- des surfaces de butée s'étendant verticalement (34) étant formées sur les faces inférieures des sections de profilé du cadre supérieur (3) pour les extrémités supérieures (43) des éléments de panneau (16-21),
- des surfaces de butée supplémentaires (40) s'étendant verticalement étant formées sur les côtés supérieurs des autres parties profilées du cadre inférieur (9) pour les extrémités inférieures des éléments de panneau (16-21), et
- les éléments de panneau (16-21) étant réalisés et fixés au cadre inférieur (9) et au cadre supérieur (3) ainsi qu'entre eux de telle sorte qu'un piètement de table indéformable (26) est formé à partir du cadre supérieur (3), des éléments de panneau (16-21) et du cadre inférieur (9),
**caractérisé en ce que**
- le cadre supérieur (3) entoure le plateau (2),
- les sections de profilé sont des sections de profilé extrudé (4-7) et les autres sections de profilé sont d'autres sections de profilé extrudé (10-13), au moins les sections de profilé extrudé (4-7) étant des sections de profilé extrudé à une ou plusieurs chambres creuses (27, 38) ; et
- au moins sur l'une des sections de profilé extrudé (4-7) sur l'un des deux côtés opposés du cadre supérieur (3), un support (22) est formé pour un rail de guidage de portique (23).

2. Table (1) selon la revendication 1, **caractérisée en ce que** les surfaces de butée s'étendant verticalement (34) sont formées dans des rainures (42) dans les faces inférieures des sections de profilé extrudé (4-7),
les rainures (42) recevant les extrémités supérieures (43) des éléments de panneau (16-21), et/ou les autres surfaces de butée (40) s'étendant verticalement étant agencées dans d'autres rainures (44) dans les faces supérieures des autres sections de profilé extrudé (10-13), les autres rainures (44) recevant les extrémités inférieures (45) des éléments de panneau (16-21).

3. Table (1) selon la revendication 1 ou 2, **caractérisée en ce que** le cadre supérieur est formé de quatre sections de profilé extrudé (4-7) s'étendant le long de ses quatre côtés et reliées rigidement entre elles dans ses quatre coins, et/ou le cadre inférieur (9) est formé par des sections de profilé extrudé (10-13) qui s'étendent le long de ses quatre côtés et sont reliées de manière rigide dans ses quatre angles, les sections de profilé extrudé (4-7) et/ou les autres sections de profilé extrudé (10-13) étant de préférence reliées entre elles par des équerres soudées (8, 13).

4. Table (1) selon la revendication 3, **caractérisée en ce que** les éléments de panneau (16-21) fixés les uns aux autres forment un cadre intermédiaire (15) s'étendant horizontalement.

5. Table (1) selon l'une des revendications précédentes, **caractérisée en ce que** le profilé extrudé à une ou plusieurs chambres creuses (27, 38) est extrudé à partir d'un alliage léger soudable.

6. Table (1) selon l'une des revendications précédentes, **caractérisée en ce que** les éléments de panneau (16-21) sont fixés au cadre supérieur (3) et/ou au cadre inférieur (9) ainsi qu'entre eux par des points de soudure ou des perles de soudure (49) et/ou par collage.

7. Table (1) selon l'une des revendications précédentes, **caractérisée en ce que** les éléments de panneau (16-21) sont des pièces moulées en tôle ou des sections de profilé plat avec des plis (46, 47) s'étendant entre le cadre supérieur (3) et le cadre inférieur (9).

8. Table (1) selon la revendication 7, **caractérisée en ce que**
les plis (46, 47) comprennent des plis (46, 47) avec un angle ≥ 100°, de préférence ≥ 110°, et/ou
les plis (46, 47) comprennent des lignes d'arête qui s'étendent à des angles ≥ 20°, de préférence ≥ 30°, par rapport à la verticale.

9. Table (1) selon l'une des revendications précédentes, **caractérisée en ce que**
chaque support (22) est formé par enlèvement de matière de la section de profilé extrudé (4-7) correspondante, chaque rail de guidage en portique (23) étant de préférence vissé sur son support (22).

10. Table (1) selon l'une des revendications précédentes, **caractérisée en ce que**
le cadre supérieur (3) est renforcé horizontalement entre ses sections de profilé extrudé (4-7) par une plaque de renfort (61) et/ou des entretoises transversales (59, 60) et/ou des entretoises diagonales (55-58).

11. Table (1) selon l'une des revendications précédentes, **caractérisée en ce que**
le plateau (2) ou une plaque supérieure du plateau (2) est monté sur le cadre supérieur (3) dans des paliers fixes (24) et des paliers mobiles (25) espacés de ceux-ci, avec une mobilité horizontale à l'intérieur du cadre supérieur (3).

12. Procédé de fabrication d'une table (1) pour une machine à plateau plat, qui présente
- un cadre supérieur (3),
- un cadre inférieur (9) et
- des éléments de panneau (16-21) s'étendant entre le cadre supérieur (3) et le cadre inférieur (9)
et qui présente en option les autres caractéristiques de l'une des revendications précédentes,
- le cadre supérieur (3) étant formé par la liaison rigide d'au moins deux sections de profilé qui s'étendent le long de deux côtés opposés du cadre supérieur (3),
**caractérisé en ce que**
- les sections de profilé sont des sections de profilé extrudé (4-7) et les autres sections de profilé sont d'autres sections de profilé extrudé (10-13), au moins les sections de profilé extrudé (4-7) étant des sections d'un profilé extrudé à une ou plusieurs chambres creuses (27, 38) ;
- au moins sur l'une des sections de profilé extrudé (4-7), sur l'un des deux côtés opposés du cadre supérieur (3), un support (22) pour un rail de guidage de portique (23) est formé ou est formé par enlèvement de matière de l'une des sections de profilé extrudé (4-7),
- le cadre supérieur (3) constitué des sections de profilé extrudé (4-7) reliées entre elles avec le support (22) formé au moins sur l'une des sections de profilé extrudé (4-7) est tendu sur un banc de redressage de telle sorte que le support (22) présente un tracé prédéfini, et
- les éléments de panneau (16-21) et le cadre inférieur (9) sont reliés au cadre supérieur (3) tendu sur le banc de redressage afin de former un châssis de table rigide de telle sorte que le support (22) conserve le tracé prédéfini lorsque le cadre supérieur est retiré du banc de redressage.

13. Procédé selon la revendication 12, **caractérisé en ce que** le rail de guidage en portique (23) est fixé sur le support (22), de préférence vissé sur le support (22), avant que le cadre supérieur (3) ne soit tendu sur le banc de redressage.

14. Procédé selon la revendication 12 ou 13, **caractérisé en ce qu**'un plateau (2) de la table (1) est logé dans le cadre supérieur (3) et/ou en ce que le cadre supérieur (3) est renforcé horizontalement entre les sections de profilé extrudé (4-7) par une plaque de renfort (61) et/ou des entretoises transversales (59, 60) et/ou des entretoises diagonales (55-58) avant que le cadre supérieur (3) ne soit tendu sur le banc de redressage.

15. Procédé selon l'une des revendications 12 à 14, **caractérisé en ce que** le cadre supérieur (3) constitué des sections de profilé extrudé (4-7) reliées entre elles est tendu sur un plateau plat d'une machine à plateau plat plus grande afin de former le support (22) par enlèvement de matière de l'une des sections de profilé extrudé (4-7).
